# EUROPEAN PATENT SPECIFICATION

(11) **EP 3 550 984 B1**
(45) Date of publication and mention of the grant of the patent: **14.09.2022**
(21) Application number: 17816520.5
(22) Date of filing: 27.11.2017
(51) Int. Cl.: A23D 7/005, A23D 7/04, A23L 27/00

(54) **AN OIL-IN-WATER EMULSION AND A PROCESS FOR ITS PREPARATION**
ÖL-IN-WASSER-EMULSION UND VERFAHREN ZU DEREN HERSTELLUNG
ÉMULSION HUILE DANS L'EAU ET SON PROCÉDÉ DE PRÉPARATION

(30) Priority: 07.12.2016 EP 16202597
(43) Date of publication of application: 16.10.2019
(73) Proprietor: Société des Produits Nestlé S.A., 1800 Vevey (CH)
(72) Inventor: GADDIPATI, Sanyasi, 78224 Singen (DE); SCHWÄGERL, Martina, 78315 Radolfzell (DE); NUECKEL, Fritz, Wilhelm, 78224 Singen (DE); ROCHA ORTEGA, Stefany, Brooklyn, NY 11226 (US)
(74) Representative: Dinger, Hansjörg
(86) International application number: PCT/EP2017/080517
(87) International publication number: WO 2018/104093

(56) References cited:
- WO-A1-2016/050458
- US-A- 5 538 751
- INAE LEE ET AL: "Reduced-Fat Mayonnaise Formulated with Gelatinized Rice Starch and Xanthan Gum", CEREAL CHEMISTRY, vol. 90, no. 1, 1 January 2013 (2013-01-01), pages 29-34, XP055345029, US ISSN: 0009-0352, DOI: 10.1094/CCHEM-03-12-0027-R

## Description

The present invention relates to an oil-in-water emulsion of the mayonnaise type, and a process for its preparation. In particular the invention relates to an oil-in-water emulsion of the mayonnaise type, and a process for its preparation wherein a modified waxy corn starch and a waxy rice starch are used.

In order to meet the requirements of modern nutrition, there is a tendency in the contemporary foodstuff industries to create products which resemble as closely as possible traditional high-fat products, but which have reduced fat levels.

One of the traditional foodstuff products having high fat levels are oil-in-water emulsions of the mayonnaise type. Traditional mayonnaise products have fat contents of 80% by weight and more. They consist of oil, normally a vegetable oil or a mixture of vegetable oils, an emulsifier, traditionally on egg yolk basis, an edible acid as e.g. acetic acid (vinegar) or citric acid (lemon juice), as well as further ingredients as salt, sugar or sweetener and further ingredients as flavorings.

The fat (oil) content of the mayonnaise is not only important for culinary reasons, but also necessary to provide the desired rheological properties, i.e. the typical creamy, shape-retaining texture of a traditional mayonnaise product. A simple reduction of the oil level of the traditional products results in products with too low viscosity, which are rather sauce like. Therefore, if the oil-level is to be reduced, special measures and modifications of the basic recipes are required to provide products with the desired texture typical for a mayonnaise of a fat (oil) content of 80% by weight or more.

In other words, the problem with an oil-in-water emulsion having a reduced content of oil is, that it normally has a too low viscosity and also has a lower stability. This makes it difficult to provide an acceptable product to the consumer.

To compensate the loss of viscosity due to a reduced oil content additional ingredients having a stabilizing and/or thickening funtionality are normally added to the emulsions. The added thickening agents and/or so-called fat mimetics are gums or other polysaccharides. Said thickening agents or fat-mimetics act by increasing the viscosity of the aqueous phase of the oil-in-water emulsion, thereby increasing the viscosity of the emulsion and stabilizing it.

With the ever growing interest from the consumers on low fat mayonnaise products the importance of choosing the appropriate ingredients to reduce the fat with less impact on the quality, taste and stability of the low fat mayonnaise is challenging. In the low fat mayonnaise, starches are commonly used as thickener to improve the textural properties of the products with reduced fats. Native starches are not stable to acid and shear that is imparted during the industrial process. Also storage stability of the products dramatically reduced due to the retrogradation of the native starches. To overcome these issues during processing and storage, chemically modified starches are used in the current product. Hydrocolloids such as xanthan, guar, gum arabic, and pectin are used as stabilisers to increase the viscosity of emulsions thereby improving the emulsion stability, pourability, cling improvement, and suspension of solid or spice particles in dressings. Furthermore, the combination of chemical modified starches and hydrocolloids can reduce the long and slimy texture of reduced-fat products and also improve mouthfeel and spreadability which are considered desirable by the consumer.

EP1675478 is directed to a reduced oil emulsion composition comprising insoluble citrus fiber, starch and/or gum as thickener and sodium caseinate as a viscosity-building emulsifier.

WO2016050458 relates to a composition in the form of an oil-in-water emulsion, containing a first flour and a second flour and/or a third starch, wherein the first flour comprises flour obtained from pulse seed, or comprises flour obtained from plants of one or more of the genera Solanum and Manihot e.g. lentil flour, mung bean flour, potato flour, cassava flour or corn flour. The second flour comprises flour obtained from plants of the genus Oryza e.g. waxy rice flour, and the third starch comprises waxy rice starch or waxy corn starch. It is stated that the use of starches, in particular waxy starches, in emulsions may lead to sticky or slimy dressings and mayonnaises, which the consumers generally dislike. In addition it is stated that by using a starch with a high amylopectin content as the only thickener and stabilizer a high amount of this starch is needed. As an advantage it is described that by combining a starch high in amylopectin content and a starch high in amylose content the total amount of starch can be reduced.

US5538751 describes a thickened foodstuff having improved Storage stability and retention of smoothness upon reheating which contains a non-pre-gelatinized amylose polymer containing component and a second biopolymer selected from the group consisting of a sheared amylopectin component, iota carrageenan, kappa carrageenan, xanthan, maltodextrins, pectins, alginates, agar, gum arabic, locust bean gum, guar gum, carboxymethyl cellulose, hydroxy propyl methyl cellulose, and mixtures thereof; with the amylose polymer containing component present as a dispersed phase.

US2338083 relates to a salad dressing not a mayonnaise in the form of an oil-in-water emulsion, containing a combination of corn starch and waxy corn starch.

Hence there is an existing need in the art and food industry to provide a better solution for an oil-in-water emulsion of the mayonnaise type or at least provides an alternative solution.

### SUMMARY OF THE INVENTION

The object of the present invention is to improve the state of the art or at least provide an alternative for an oil-in-water emulsion of the mayonnaise type:
i) avoid using gums;
ii) avoid using xanthan;
iii) avoid using citrus fiber;
iv) reach a shelf life over 12 month with the same sensory properties;
v) consumer friendly ingredients and labelling;
vi) no or reduced syneresis;
vii) being spoonable;
viii) good mouthfeel like full fat mayonnaise;

The object of the present invention is achieved by the subject matter of the independent claims. The dependent claims further develop the idea of the present invention.

Accordingly, the present invention provides in a first aspect an oil-in-water emulsion comprising
i) water in an amount of 25 to 70% (by weight of the composition)
ii) oil in an amount of 15 to 55% (by weight of the composition);
iii) a modified waxy corn starch in an amount of 1.5 to 5.5% (by weight of the composition), wherein the term modified waxy corn starch refers to a physically modified or chemically modified starch having an amylopectin content of 95 to 98% (by dry weight of the starch) and has an amylose content of 5 to 2% (by dry weight of the starch);
iv) a waxy rice starch in an amount of 0.15 to 3.5% (by weight of the composition), wherein the term waxy rice starch refers to an amylopectin content of 95 to 98% (by dry weight of the starch ) and has an amylose content of 5 to 2% (by dry weight of the starch);
v) an emulsifier in an amount of 2 to 9% (by weight of the composition);
vi) acid in an amount of 0.1 to 10% (by weight of the composition);
and wherein the total amount of starch is in an amount of 2 to 6% (by weight of the composition) and wherein the oil-in-water emulsion has a viscosity in the range of 8 to 30 Pa.s at a shear rate of 10s-1 at 20°C.

In a second aspect of the invention provides a process for the preparation of an oil-in-water emulsion comprising
a) Mix water in an amount of 25 to 70% (by weight of the composition) with an emulsifier in an amount of 2 to 9% (by weight of the composition);
b) Mix to step a) a modified waxy corn starch in an amount of 1.5 to 5.5% (by weight of the composition) and a waxy rice starch in an amount of 0.15 to 3.5% (by weight of the composition), wherein the term modified waxy corn starch refers to a physically modified or chemically modified starch having an amylopectin content of 95 to 98% (by dry weight of the starch) and has an amylose content of 5 to 2% (by dry weight of the starch) and wherein the term waxy rice starch refers to an amylopectin content of 95 to 98% (by dry weight of the starch) and has an amylose content of 5 to 2% (by dry weight of the starch);
c) Mix to step b) oil in an amount of 15 to 55% (by weight of the composition) at a shear rate at 5000 to 8000 rpm.
d) Mix to step c) acid in an amount of 0.1 to 10% (by weight of the composition)
e) Pasteurise the oil-in-water emulsion at a temperature of 70 to 90°C.
and wherein the total amount of starch is in an amount of 2 to 6% (by weight of the composition) and wherein the oil-in-water emulsion has a viscosity in the range of 8 to 30 Pa.s at a shear rate of 10s-1 at 20°C.

A third aspect of the invention relates to the use of an oil-in-water emulsion for preparing a food product.

It has been surprisingly found by the inventors that by using an emulsion having a modified waxy corn starch and a waxy rice starch in the disclosed composition, which are both high amylopectin starches (amylopectin content 95 to 98% by weight of starch), have now solved the requirement to achieve the necessary attributes:
- avoid using gums;
- avoid using xanthan as a stabilizer;
- avoid using citrus fiber;
- having a stable product;
- no or reduced syneresis;
- being spoonable;
- good mouthfeel like full fat mayonnaise;
- having a good sensory profile.

### DETAILED DESCRIPTION

The present invention pertains to an oil-in-water emulsion comprising
i) water in an amount of 25 to 70% (by weight of the composition)
ii) oil in an amount of 15 to 55% (by weight of the composition);
iii) a modified waxy corn starch in an amount of 1.5 to 5.5% (by weight of the composition), wherein the term modified waxy corn starch refers to a physically modified or chemically modified starch having an amylopectin content of 95 to 98% (by dry weight of the starch) and has an amylose content of 5 to 2% (by dry weight of the starch);
iv) a waxy rice starch in an amount of 0.15 to 3.5% (by weight of the composition), wherein the term waxy rice starch refers to an amylopectin content of 95 to 98% (by dry weight of the starch) and has an amylose content of 5 to 2% (by dry weight of the starch);
v) an emulsifier in an amount of 2 to 9% (by weight of the composition);
vi) acid in an amount of 0.1 to 10% (by weight of the composition);
and wherein the total amount of starch is in an amount of 2 to 6% (by weight of the composition) and wherein the oil-in-water emulsion has a viscosity in the range of 8 to 30 Pa.s at a shear rate of 10s-1 at 20°C.

In a preferred embodiment of the present invention, the oil-in-water emulsion comprises oil in an amount of 15-55% (by weight of the total composition), preferably from 20-50%, preferably from 25-45%, preferably from 25-40%, more preferably from 27-38% (by weight of the total composition).

In one embodiment, the oil of the present cooking aid is liquid at a temperature of 25°C, preferably at a temperature of 20°C.

In a preferred embodiment, the oil is an animal or vegetable oil. Preferably, the oil is a vegetable oil selected from the group consisting of palm oil, palm olein, olive oil, corn oil, sunflower oil, rice bran oil, soybean oil, rapseed oil, canola oil, or a combination thereof.

The oil-in-water emulsion of the present invention comprises water (total amount of moisture present) in an amount of 25-70% (by weight of the total composition), preferably from 30-65%, preferably from 35-60%, more preferably from 40-60%, even more preferably from 45-55% (by weight of the total composition).

The oil-in-water emulsion of the present invention comprises a modified waxy corn starch in an amount of 1.5 to 5.5% (by weight of the composition), preferably in an amount of 2 to 5.5% (by weight of the composition), preferably in an amount of 2.5 to 5.5% (by weight of the composition), preferably in an amount of 3 to 5.5% (by weight of the composition), preferably in an amount of 3.5 to 5.5% (by weight of the composition), preferably in an amount of 4 to 5.5% (by weight of the composition), more preferably in an amount of 4 to 5% (by weight of the composition).

The term "waxy rice starch" refers to a high amount of amylopectin, preferably an amylopectin content of 95 to 98% (by dry weight of the starch ) and has an amylose content of 5 to 2% (by dry weight of the starch).

The term "modified waxy corn starch" refers to a physically modified or chemically modified starch having an amylopectin content of 95 to 98% (by dry weight of the starch) and has an amylose content of 5 to 2% (by dry weight of the starch), preferably physically modified starch which is highly resistant to heat and shear or combination thereof. Preferably physically modified starches are heat-moisture treated to improve the stability of the starch granule. None modified starch is not highly resistant to heat and shear or combination thereof.

The oil-in-water emulsion of the present invention comprises a waxy rice starch in an amount of 0.15 to 3.5% (by weight of the composition), preferably in an amount of 0.15 to 3% (by weight of the composition), preferably in an amount of 0.2 to 3% (by weight of the composition), preferably in an amount of 0.3 to 3% (by weight of the composition

The oil-in-water emulsion of the present invention comprises a total amount of starch of 2 to 6% (by weight of the composition), preferably in an amount of 3 to 6% (by weight of the composition), preferably in an amount of 3.5 to 5.5% (by weight of the composition). In an embodiment the present invention only includes a modified waxy corn starch and a waxy rice starch and no other starch or flour. In an embodiment the present invention uses only starches having an amylopectin content of 95 to 98% (by dry weight of the starch) and an amylose content of 5 to 2% (by dry weight of the starch).

The oil-in-water emulsion of the present invention comprises a ratio of the modified waxy corn starch to the waxy rice starch. In an embodiment the ratio of the modified waxy corn starch to the waxy rice starch is between 0.3 to 25, preferably between 0.5 to 15, preferably between 0.5 to 11.

In an embodiment the present invention does not not include hydrocolloids constisting of xanthan, guar gum, locust bean gum, gum karaya, gum tragacanth, gum arabic, alginate, pectin, carrageenan, gelatin, gellan, agar or a combination thereof. In an embodiment the present invention does not not include native starches which are not waxy starches and therefore not having an amylopectin content of 95 to 98% (by dry weight of the starch) and has an amylose content of 5 to 2% (by dry weight of the starch). In an embodiment the present invention does not not include native flours which are not waxy flours and therefore not having an amylopectin content of 95 to 98% (by dry weight of the starch) and has an amylose content of 5 to 2% (by dry weight of the starch). In an embodiment the present invention does not not include corn starch, corn flour, lentil flour, mung bean flour, potato flour, cassava flour, waxy rice flour or combination thereof.

The oil-in-water emulsion of the present invention comprises an emulsifier in an amount of 2 to 9% (by weight of the composition), preferably in an amount of 3 to 8% (by weight of the composition), preferably in an amount of 3.5 to 7.5% (by weight of the composition), preferably in an amount of 3.5 to 7% (by weight of the composition); preferably in an amount of 3.5 to 6.5% (by weight of the composition); preferably in an amount of 4 to 6% (by weight of the composition), more preferably in an amount of 4 to 5% (by weight of the composition). Preferably the emulsifier is selected from the group consisting of unmodified egg yolk, modified egg yolk, phospholipid and protein. Preferably, the emulsifier used is egg yolk, modified or unmodified. By "modified egg yolk" in the present invention we understand egg yolk modified with enzymes or by fermentation, for example egg yolk modified with phospholipase A. An emulsifier as lecithin, monoglycerides, diglycerides, polyglycerol esters or combinations thererof is not included.

The oil-in-water emulsion of the present invention comprises acid in an amount of 0.1 to 10% (by weight of the composition). The amount of acid is such that the pH ranges from 3 to 5, preferably from 3 to 4.6. Suitable acids are selected from acetic acid, citric acid, lactic acid, malic acid, phosphoric acid, hydrochloric acid, glucono-delta-lactone and combinations thereof. Preferably, the emulsions comprise acetic acid, vinegar, citric acid or combinations thereof.

The oil-in-water emulsion of the present invention further comprises flavorings in an amount of less than 10% (by weight of the composition), preferably in an amount of 0.5 to 10% (by weight of the composition), preferably in an amount of 2 to 10% (by weight of the composition), more preferably in an amount of 2.5 to 8% (by weight of the composition). Flavorings include salt, sugar, ingwer, lemongrass, curcuma, chili, paprika, mustard, garlic, onion, turmeric, cheese, jalapeno pepper, white pepper powder and black pepper in wet or dry format or combination thereof, preferably salt, sugar, mustard or combinations thereof. These ingredients are only present for flavoring reasons. The type of sugar or sweetener used is not critical and can be any type of edible sugar, but normally should not be a sugar or sweetener having a considerable stabilizing or thickening effect and/or not having a significant influence on the structure of the emulsion. The sugar used is preferably selected from the group consisting of fructose, lactose, glucose, saccharose, and the sweetener is peferably selected from the group consisting of xylite and aspartame. The oil-in-water emulsion of the present invention preferably comprise salt, preferably NaCl. If salt is added then preferably the concentration of salt ranges from 0.1% to 2% by weight of the composition, preferably from 0.5% to 2% by weight.

The viscosity of the emulsion indicated in the present invention is the dynamic viscosity measured at 20 °C at a shear rate of 10s⁻¹, for example with a Carrimed Rheometer CP50-4. The viscosity of the emulsion is in the range of about 8 to 30 Pa·s at a shear rate of 10s-1 at 20°C, preferably in the range of about 10 to 30 Pa·s at a shear rate of 10s-1 at 20°C, preferably in the range of about 12 to 30 Pa s at a shear rate of 10s-1 at 20°C, more preferably in the range of about 14 to 28 Pa·s at a shear rate of 10s-1 at 20°C.

The emulsion having a viscosity in the range of about 8 to 30 Pa·s at a shear rate of 10s-1 at 20°C is spoonable. "Spoonable" means that a composition is semi-solid but not free-flowing on a time scale typical for eating a meal, meaning not free-flowing within a time period of an hour. A sample of such substance is able to be dipped with a spoon from a container containing the composition. In an embodiment salad dressings are not included as the viscosity is below 7.5 Pa s at a shear rate of 10s-1 at 20°C.

The product of the invention, though having a reduced oil content, has a viscosity whivh is in the same range as the normal mayonnaise products having an oil content of about 80%.

Further advantages and features of the present invention are apparent from the examples.

### EXAMPLES

The invention is further described with reference to the following examples. It will be appreciated that the invention as claimed is not intended to be limited in any way by these examples.

The viscosity of the composition has been measured by using a modular compact Rheometer (Physica MCR 300; measuring system CP50-4), at a shear rate of 10s-1 at 20°C.

10 internal experienced panelists were used to rate the products between 0 to 5. 0 is the lowest possible rating and 5 the highest possible rating.

### Example 1: Process

The general procedure for preparing an oil-in-water emulsion is as follows:
a) Mix water with egg yolk and mustard;
b) Mix to step a) a modified waxy corn starch, a waxy rice starch, salt and sugar;
c) Add to step b) slowly oil at a shear rate of 6000 rpm.
d) Add to step c) vinegar and further mix at a shear rate of 4000 rpm.
e) Pasteurise the oil-in-water emulsion at a temperature of 85°C for 2 min.

To add vinegar as last ingredient is essential as otherwise the emulsion has a bigger particle size of the oil droplets which could reduce the shelf life (stability) of the emulsion.

### Examples 2-11:

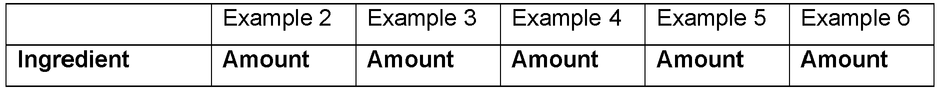

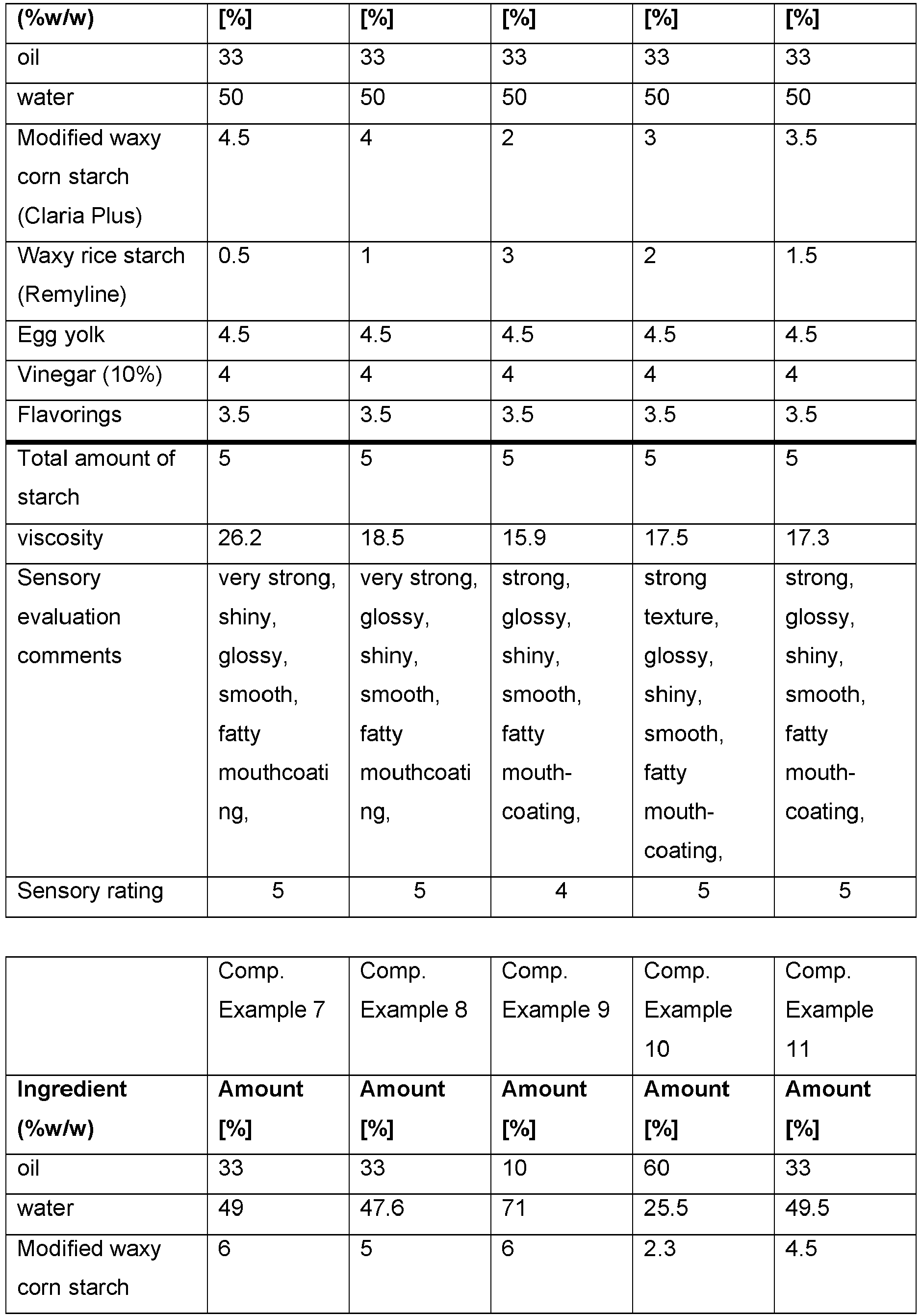

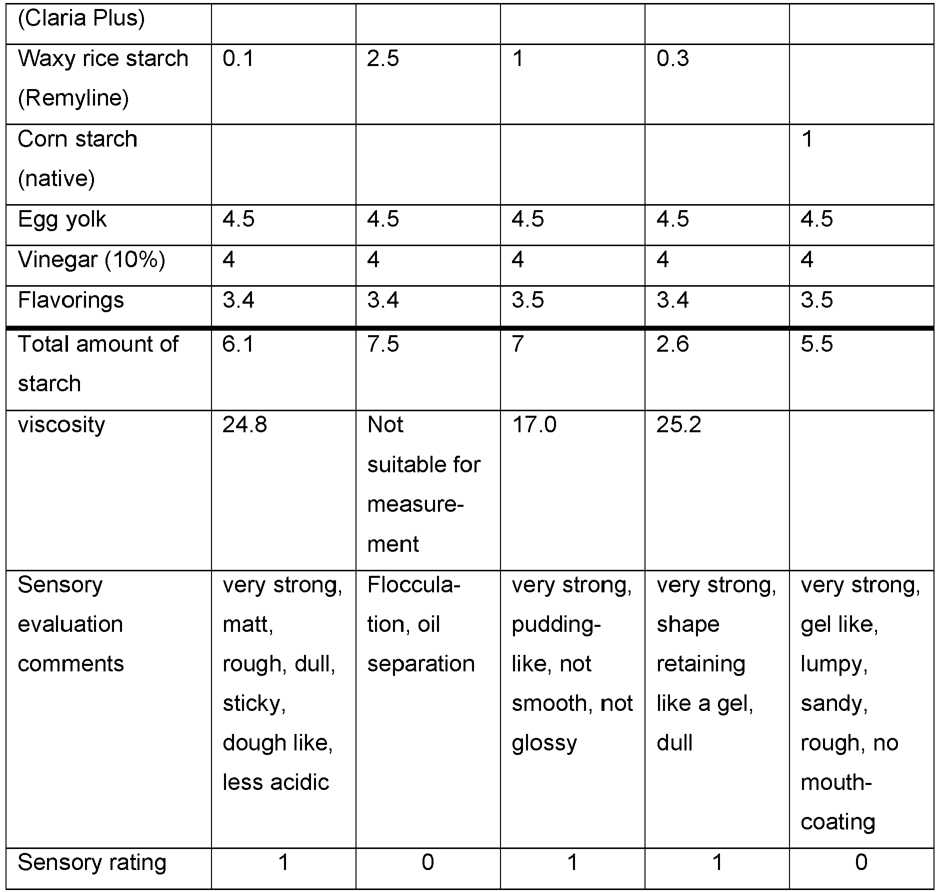

### Examples 12-15:

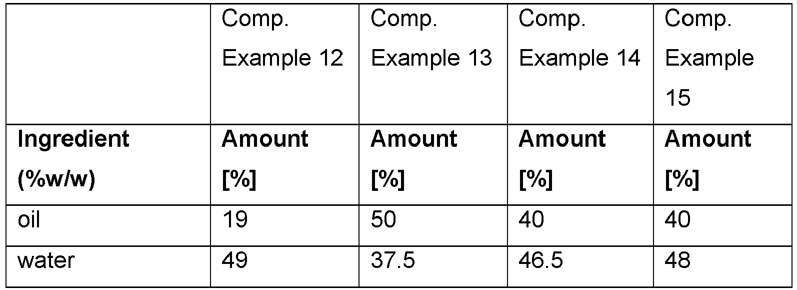

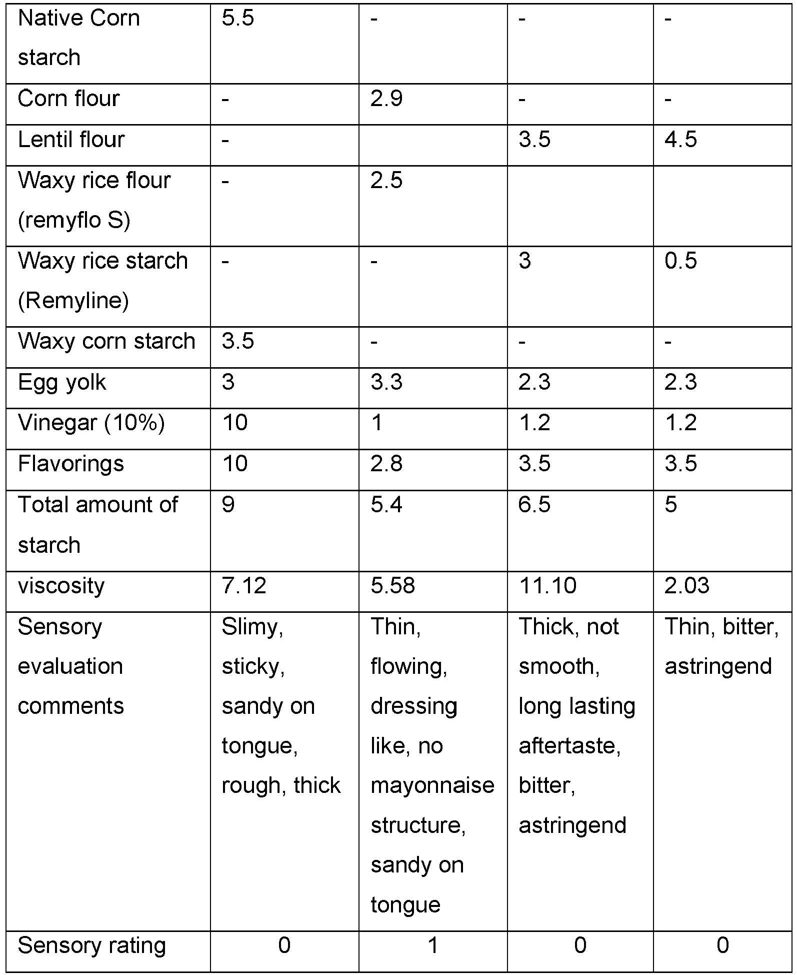

Comparison example 12 is related to US2338083. It is shown that the viscosity is too low by using a native corn starch instead of a modified waxy corn starch and also the mouthfeel is not as good by using a waxy corn starch instead of a waxy rice starch. Comparison examples 13-15 are related to WO2016050458. It is also shown that the viscosity is too low in case the total amount of starch is between 2 to 6wt% as only none modified starches are used. In case lentil flour is used in combination with waxy rice starch the sensory profile has been described as astringend and bitter. All examples 2-6 have a well perceived sensory evaluation, describing a fatty mouthcoating. Only with the selected combination of a modified waxy corn starch and a waxy rice starch these beneficial sensory attributed and a viscosity in the range of 8 to 30 Pa.s at a shear rate of 10s-1 at 20°C have been achieved.

## Claims

1. An an oil-in-water emulsion comprising
i) water in an amount of 25 to 70% (by weight of the composition)
ii) oil in an amount of 15 to 55% (by weight of the composition);
iii) a modified waxy corn starch in an amount of 1.5 to 5.5% (by weight of the composition), wherein the term modified waxy corn starch refers to a physically modified or chemically modified starch having an amylopectin content of 95 to 98% (by dry weight of the starch) and has an amylose content of 5 to 2% (by dry weight of the starch);
iv) a waxy rice starch in an amount of 0.15 to 3.5% (by weight of the composition), wherein the term waxy rice starch refers to an amylopectin content of 95 to 98% (by dry weight of the starch ) and has an amylose content of 5 to 2% (by dry weight of the starch);
v) an emulsifier in an amount of 2 to 9% (by weight of the composition);
vi) acid in an amount of 0.1 to 10% (by weight of the composition);
and wherein the total amount of starch is in an amount of 2 to 6% (by weight of the composition) and wherein the oil-in-water emulsion has a viscosity in the range of 8 to 30 Pa.s at a shear rate of 10s-1 at 20°C.

2. An emulsion according to claims 1, wherein the emulsifier is selected from the group consisting of unmodified egg yolk, modified egg yolk, phospholipid, protein or a combination thereof.

3. An emulsion according to any of claims 1 to 2, wherein the emulsifier is selected from the group consisting of unmodified egg yolk, modified egg yolk or a combination thereof.

4. An emulsion according to any of claims 1 to 3, wherein the emulsifier does not include lecithin, monoglycerides, diglycerides, polyglycerol esters or a combination thereof.

5. An emulsion according to any of claims 1 to 4, wherein the oil-in-water emulsion does not not include hydocolloids, preferably does not include xanthan.

6. An emulsion according to any of claims 1 to 5, wherein the oil-in-water emulsion does not not include corn starch, corn flour, lentil flour, mung bean flour, potato flour, cassava flour, waxy rice flour or combination thereof.

7. An emulsion according to any of claims 1 to 6 further comprises flavorings in an amount of 0.1 to 7% (by weight of the composition).

8. An emulsion according to any of claims 1 to 6 further comprises sugar, sweetener or a combination thereof in an amount of 0.1 to 10% (by weight of the composition).

9. An emulsion according to any of claims 1 to 8, wherein the acid is selected from the group consisting of acetic acid, vinegar, citric acid, lactic acid, malic acid, phosphoric acid, hydrochloric acid and combinations thereof.

10. An emulsion according to any of claims 1 to 9, wherein the acid is vinegar.

11. An emulsion according to any of claims 1 to 10, wherein and the modified waxy corn starch to the waxy rice starch starch has a ratio between 0.3 to 25.

12. A process for the preparation of an oil-in-water emulsion according to any of claims 1 to 11 comprising:
a) Mix water with an emulsifier;
b) Mix to step a) the modified waxy corn starch and the waxy rice starch starch;
c) Mix to step b) the oil at a shear rate of 5000 to 8000 rpm;
d) Mix to step c) the acid;
e) Pasteurise the oil-in-water emulsion at a temperature of 70 to 90°C.

13. A process according to claim 12, wherein the mixing of step a), step b) and step d) is done at a shear rate of 1000 to 5000 rpm.

14. The use of an oil-in-water emulsion as claimed in any of claims 1 to 11 for preparing a food product.

15. The use of an oil-in-water emulsion as claimed in claim 14 for preparing a mayonnaise.

## Patentansprüche

1. ÖI-in-Wasser-Emulsion, umfassend
i) Wasser in einer Menge von 25 bis 70 % (bezogen auf das Gewicht der Zusammensetzung)
ii) Öl in einer Menge von 15 bis 55 % (bezogen auf das Gewicht der Zusammensetzung);
iii) eine modifizierte wachsartige Maisstärke in einer Menge von 1,5 bis 5,5 % (bezogen auf das Gewicht der Zusammensetzung), wobei der Begriff modifizierte wachsartige Maisstärke auf eine physikalisch modifizierte oder chemisch modifizierte Stärke Bezug nimmt, die einen Amylopektingehalt von 95 bis 98 % (bezogen auf das Trockengewicht der Stärke) aufweist und einen Amylosegehalt von 5 bis 2 % (bezogen auf das Trockengewicht der Stärke) aufweist;
iv) eine wachsartige Reisstärke in einer Menge von 0,15 bis 3,5 % (bezogen auf das Gewicht der Zusammensetzung), wobei der Begriff wachsartige Reisstärke auf einen Amylopektingehalt von 95 bis 98 % (bezogen auf das Trockengewicht der Stärke) Bezug nimmt und einen Amylosegehalt von 5 bis 2 % (bezogen auf das Trockengewicht der Stärke) aufweist;
v) Emulgator in einer Menge von 2 bis 9 % (bezogen auf das Gewicht der Zusammensetzung);
vi) Säure in einer Menge von 0,1 bis 10 % (bezogen auf das Gewicht der Zusammensetzung);
und wobei die Gesamtmenge an Stärke in einer Menge von 2 bis 6 Gew.-% (bezogen auf das Gewicht der Zusammensetzung) vorliegt und wobei die Öl-in-Wasser-Emulsion eine Viskosität in dem Bereich von 8 bis 30 Pa.s bei einer Scherrate von 10 s-1 bei 20 °C aufweist.

2. Emulsion nach Anspruch 1, wobei der Emulgator ausgewählt ist aus der Gruppe bestehend aus unmodifiziertem Eigelb, modifiziertem Eigelb, Phospholipid, Protein oder einer Kombination davon.

3. Emulsion nach einem der Ansprüche 1 bis 2, wobei der Emulgator ausgewählt ist aus der Gruppe bestehend aus unmodifiziertem Eigelb, modifiziertem Eigelb oder einer Kombination davon.

4. Emulsion nach einem der Ansprüche 1 bis 3, wobei der Emulgator nicht Lecithin, Monoglyceride, Diglyceride, Polyglycerinester oder eine Kombination davon einschließt.

5. Emulsion nach einem der Ansprüche 1 bis 4, wobei die Öl-in-Wasser-Emulsion Hydrokolloide nicht nicht einschließt, vorzugsweise nicht Xanthan einschließt.

6. Emulsion nach einem der Ansprüche 1 bis 5, wobei die Öl-in-Wasser-Emulsion Maisstärke, Maismehl, Linsenmehl, Mungobohnenmehl, Kartoffelmehl, Maniokmehl, wachsartiges Reismehl oder eine Kombination davon nicht nicht einschließt.

7. Emulsion nach einem der Ansprüche 1 bis 6, ferner umfassend Aromastoffe in einer Menge von 0,1 bis 7 % (bezogen auf das Gewicht der Zusammensetzung).

8. Emulsion nach einem der Ansprüche 1 bis 6, ferner umfassend Zucker, Süßstoff oder eine Kombination davon in einer Menge von 0,1 bis 10 % (bezogen auf das Gewicht der Zusammensetzung).

9. Emulsion nach einem der Ansprüche 1 bis 8, wobei die Säure ausgewählt ist aus der Gruppe bestehend aus Essigsäure, Essig, Zitronensäure, Milchsäure, Äpfelsäure, Phosphorsäure, Salzsäure und Kombinationen davon.

10. Emulsion nach einem der Ansprüche 1 bis 9, wobei die Säure Essig ist.

11. Emulsion nach einem der Ansprüche 1 bis 10, wobei und die modifizierte wachsartige Maisstärke zu der wachsartigen Reisstärkestärke ein Verhältnis zwischen 0,3 bis 25 aufweist.

12. Verfahren zur Herstellung einer Öl-in-Wasser-Emulsion nach einem der Ansprüche 1 bis 11, umfassend:
a) Mischen von Wasser mit einem Emulgator;
b) Mischen der modifizierten wachsartigen Maisstärke und der wachsartigen Reisstärkestärke zu Schritt a);
c) Mischen des Öls mit einer Scherrate von 5000 bis 8000 U/min zu Schritt b);
d) Mischen der Säure zu Schritt c);
e) Pasteurisieren der Öl-in-Wasser-Emulsion bei einer Temperatur von 70 bis 90 °C.

13. Verfahren nach Anspruch 12, wobei das Mischen von Schritt a), Schritt b) und Schritt d) bei einer Scherrate von 1000 bis 5000 U/min erfolgt.

14. Verwendung einer Öl-in-Wasser-Emulsion nach einem der Ansprüche 1 bis 11 zum Herstellen eines Lebensmittelprodukts.

15. Verwendung einer Öl-in-Wasser-Emulsion nach Anspruch 14 zum Herstellen einer Mayonnaise.

## Revendications

1. Émulsion huile-dans-eau comprenant
i) de l'eau en une quantité de 25 à 70 % (en poids de la composition)
ii) de l'huile en une quantité de 15 à 55 % (en poids de la composition) ;
iii) un amidon de maïs cireux modifié en une quantité de 1,5 à 5,5 % (en poids de la composition), dans laquelle le terme amidon de maïs cireux modifié désigne un amidon physiquement modifié ou chimiquement modifié ayant une teneur en amylopectine de 95 à 98 % (en poids sec de l'amidon) et a un teneur en amylose de 5 à 2 % (en poids sec de l'amidon) ;
iv) un amidon de riz cireux en une quantité de 0,15 à 3,5 % (en poids de la composition), dans laquelle le terme amidon de riz cireux désigne une teneur en amylopectine de 95 à 98 % (en poids sec de l'amidon) et a une teneur en amylose de 5 à 2 % (en poids sec de l'amidon) ;
v) un émulsifiant en une quantité de 2 à 9 % (en poids de la composition) ;
vi) un acide en une quantité de 0,1 à 10 % (en poids de la composition) ;
et dans laquelle la quantité totale d'amidon est en une quantité de 2 à 6 % (en poids de la composition) et dans laquelle l'émulsion huile-dans-eau a une viscosité dans la plage de 8 à 30 Pa.s à une vitesse de cisaillement de 10 s-1 à 20 °C.

2. Émulsion selon les revendications 1, dans laquelle l'émulsifiant est choisi dans le groupe constitué de jaune d'œuf non modifié, jaune d'œuf modifié, phospholipide, protéine ou une combinaison de ceux-ci.

3. Émulsion selon l'une quelconque des revendications 1 à 2, dans laquelle l'émulsifiant est choisi dans le groupe constitué de jaune d'œuf non modifié, jaune d'œuf modifié ou une combinaison de ceux-ci.

4. Émulsion selon l'une quelconque des revendications 1 à 3, dans laquelle l'émulsifiant n'inclut pas de lécithine, de monoglycérides, de diglycérides, d'esters de polyglycérol ou de combinaison de ceux-ci.

5. Émulsion selon l'une quelconque des revendications 1 à 4, dans laquelle l'émulsion huile-dans-eau n'inclut pas d'hydrocolloïdes, de préférence n'inclut pas de xanthane.

6. Émulsion selon l'une quelconque des revendications 1 à 5, dans laquelle l'émulsion huile-dans-eau n'inclut pas d'amidon de maïs, de farine de maïs, de farine de lentille, de farine de haricot mungo, de farine de pomme de terre, de farine de manioc, de farine de riz cireux ou de combinaison de ceux-ci.

7. Émulsion selon l'une quelconque des revendications 1 à 6 comprend en outre des arômes en une quantité de 0,1 à 7 % (en poids de la composition).

8. Émulsion selon l'une quelconque des revendications 1 à 6 comprend en outre du sucre, un édulcorant ou une combinaison de ceux-ci en une quantité de 0,1 à 10 % (en poids de la composition).

9. Émulsion selon l'une quelconque des revendications 1 à 8, dans laquelle l'acide est choisi dans le groupe constitué d'acide acétique, vinaigre, acide citrique, acide lactique, acide malique, acide phosphorique, acide chlorhydrique et combinaisons de ceux-ci.

10. Émulsion selon l'une quelconque des revendications 1 à 9, dans laquelle l'acide est du vinaigre.

11. Émulsion selon l'une quelconque des revendications 1 à 10, dans laquelle et de l'amidon de maïs cireux modifié à l'amidon d'amidon de riz cireux a un rapport entre 0,3 et 25.

12. Procédé de préparation d'une émulsion huile-dans-eau selon l'une quelconque des revendications 1 à 11 comprenant :
a) mélanger de l'eau avec un émulsifiant ;
b) mélanger à l'étape a) l'amidon de l'amidon de maïs cireux modifié et de l'amidon de riz cireux ;
c) mélanger à l'étape b) l'huile à une vitesse de cisaillement de 5000 à 8000 tr/min ;
d) mélanger à l'étape c) l'acide ;
e) pasteuriser l'émulsion huile-dans-eau à une température de 70 à 90 °C.

13. Procédé selon la revendication 12, dans lequel le mélange de l'étape a), de l'étape b) et de l'étape d) est fait à une vitesse de cisaillement de 1000 à 5000 tr/min.

14. Utilisation d'une émulsion huile-dans-eau telle que revendiquée dans l'une quelconque des revendications 1 à 11 pour la préparation d'un produit alimentaire.

15. Utilisation d'une émulsion huile-dans-eau telle que revendiquée dans la revendication 14 pour la préparation d'une mayonnaise.
